(19) 

Europäisches
Patentamt
European
Patent Office
Office européen
des brevets

(11) **EP 1 496 608 B1**

(12) **EUROPEAN PATENT SPECIFICATION**

(45) Date of publication and mention
of the grant of the patent:
**19.01.2011 Bulletin 2011/03**

(51) Int Cl.:
***H02P 7/00*** *(2006.01)*

(21) Application number: **04254075.7**

(22) Date of filing: **07.07.2004**

(54) **Spindle motor drive controller**

Spindelmotorantriebssteuerung

Contrôl d'entraînement de moteur de broche

(84) Designated Contracting States:
**DE**

(30) Priority: **11.07.2003 JP 2003273647**

(43) Date of publication of application:
**12.01.2005 Bulletin 2005/02**

(73) Proprietor: **FANUC LTD**
**Minamitsuru-gun,**
**Yamanashi 401-0597 (JP)**

(72) Inventors:
 • **Iwashita, Yasusuke**
  **Room 9-307 FANUC**
  **Minamitsuru-gun**
  **Yamanashi 401-0511 (JP)**

 • **Akiyama, Takahiro**
  **FANUC Dai3virakaramatsu**
  **Minamitsuru-gun**
  **Yamanashi 401-0511 (JP)**
 • **Morita, Yuuki**
  **FANUC Dai3virakaramatsu**
  **Minamitsuru-gun**
  **Yamanashi 401-0511 (JP)**

(74) Representative: **Haseltine Lake LLP**
  **Redcliff Quay**
  **120 Redcliff Street**
  **Bristol BS1 6HU (GB)**

(56) References cited:
  **EP-A- 1 139 561     WO-A-97/39523**
  **JP-A- 6 217 587     JP-A- 7 222 478**
  **JP-A- 2001 275 394  US-A- 5 161 073**
  **US-A- 5 744 927     US-A1- 2001 054 874**

**Description**

BACKGROUND OF THE INVENTION

1. Field of the Invention

The present invention relates to a spindle motor drive controller for a machine tool and in particular to a PWM spindle motor drive controller that controls the current flowing into a spindle motor to control the operation thereof by applying a pulse-width modulated voltage from an inverter to the windings of the spindle motor.

2. Description of the Related Art

As a motor for driving a spindle of a machine tool is required to control the spindle at any speed, a voltage command value computed from a current command and a current feedback value is modulated using a pulse width modulation (PWM) technique and the modulated voltage is applied to the windings of the motor driving the spindle to control the operation of the motor.

The voltage command, which is output from a current controller, is compared with a triangular wave and the power switching element in the inverter that drives the motor is switched on or off depending on whether or not the voltage commandvalue is above the triangularwave voltage. To prevent the power switching element in the inverter from short-circuiting the DC power supply during the switching operations, the power switching element operates with a deadband. As the PWM cycle (triangular wave cycle) shortens, the deadband increases relative to the pulse width and consequently reduces the torque. To avoid this torque reduction, it is known art to switch the PWM cycle with commands programmed to shorten the PWM cycle when high-precision control is required for machining and other operations, and to lengthen the PWM cycle when torque is required, as described in Japanese Patent Application Laid-Open No. 2001-275394, for example.

An inverter that drives a motor produces considerable noise while the motor is running at low speed with constant torque and produces less noise while the motor is running at high speed with constant output. Low-noise inverters are known which reduce motor noise by increasing the PWM frequency in the constant torque range below a specified switching speed and decreasing the PWM frequency gradually in the low output range above the switching speed. It is also known art to reduce motor noise by increasing the PWM frequency only in the positional command mode, in which the noise is loud, and to suppress the generation of heat in the power switching element while suppressing motor noise by decreasing the PWM frequency as the load on the motor increases, as described in Japanese Patent Application Laid-Open No. 07-222478 (US5744927).

Both of the patent documents mentioned above disclose PWM cycle (PWM frequency) switching techniques. The purpose of the PWM cycle switching technique described in Japanese Patent Application Laid-Open No. 2001-275394, however, is to reduce the effect of the deadband during PWM-controlled switching, because the deadband affects the output torque. The purpose of the PWM cycle switching technique described in Japanese Patent Application Laid-Open No. 07-222478 is to reduce noise.

One problem found in the prior art is heat generation in the motor and drive unit. Shortening the PWM cycle, i.e., increasing the PWM frequency, reduces the high frequency components superimposed on the current flowing into the motor and consequently reduces heat generation in the motor, but the power switching element operates more frequently, so heat generation in the drive unit increases.

On the other hand, lengthening the PWM cycle, i.e., decreasing the PWM frequency, allows the power switching element to operate less frequently and consequently reduces heat generation in the drive unit, but increases the high frequency components superimposed on the current and consequently increases heat generation in the motor.

WO9739523 A1 discloses a PWM controlled multiphase DC motor apparatus having a multiphase DC motor, a current sensor, and a PWM controller. Using the feedback from the current sensor, the PWM controller maintains approximately constant torque in the DC motor by adjusting the duty cycle of the PWM signal.

SUMMARY OF THE INVENTION

The present invention provides a spindle motor drive controller using a PWM technique for driving the spindle motor in a machine tool, wherein heat generation in the motor and drive unit is suppressed by changing the PWM cycle according to the magnitude of a current value. The controller is characterised in that when the current value is above a threshold, the PWM cycle is lengthened to reduce heat generation in the drive unit; and when the current value is equal to or less than a threshold, the PWM cycle is shortened to reduce heat generation in the motor.

More specifically, if the excitation frequency is higher than a frequency determined by the thermal time constant of the power switching element, the current limit value for switching the PWM frequency is set to a fixed value; if the excitation frequency is lower than the frequency determined by the thermal time constant of the power switching element, the current limit value is lowered in accordance with the excitation frequency. Alternatively, if the excitation frequency is higher than the frequency determined by the thermal time constant of the power switching element, the current threshold level for changing the PWM frequency is set to a fixed value; if the excitation frequency is lower than the frequency determined by the thermal time constant of the power switching element, the current threshold level is lowered according to the excitation frequency.

To prevent generation of chattering when the PWM cycle is changed (i.e., the PWM frequency is switched) according to the magnitude of the current value, the magnitude of a current feedback signal obtained through a filter is used to determine the magnitude of the current value. The switching of the PWM cycle is also performed with hysteresis.

The present invention takes account of both heat generation in a spindle motor due to high frequency components superimposed by pulse-width modulation on the current flowing into the spindle motor and heat generation in the spindle motor drive controller due to the switching operation of the power switching element caused by pulse-width modulation, and can suppress heat generation in the spindle motor and the spindle motor drive controller in a well balanced way.

BRIEF DESCRIPTION OF THE DRAWINGS

The forgoing and other objects and feature of the invention will be apparent from the following description of preferred embodiments of the invention with reference to the accompanying drawings, in which:

FIG. 1 is a block diagram illustrating essential components of an embodiment of a spindle motor drive controller according to the present invention.
FIG. 2 illustrates threshold level computation process in the spindle motor drive controller of FIG. 1.
FIG. 3 illustrates PWM frequency switching in the spindle motor drive controller of FIG. 1.
FIG. 4 is a block diagram illustrating PWM frequency switching.
FIG. 5 is a flowchart of PWM frequency switching control processing performed at predetermined intervals by a processor that controls current in the spindle motor drive controller in FIG. 1.

DESCRIPTION OF THE EMBODIMENTS

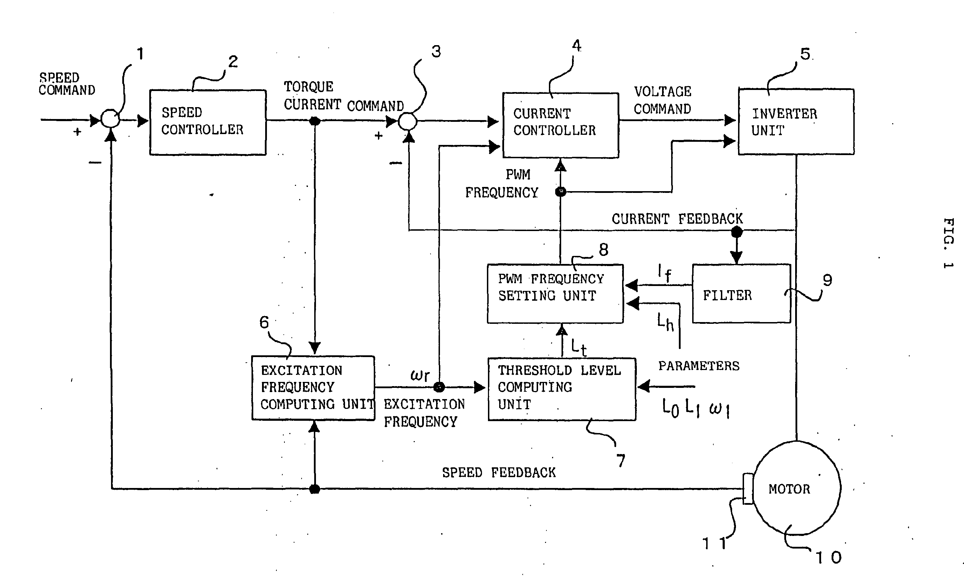

An embodiment of a spindle motor drive controller according to the present invention will be described with reference to the block diagram in FIG. 1.

A subtractor 1 obtains a speed deviation by subtracting a speed feedback signal, received from a speed detector 11 that detects the speed of the motor 10, from a speed command received from a higher controller such as a numerical control device (or a positional loop control unit). A speed controller 2 obtains a torque current command by performing proportional-plus-integral control or other speed loop processing based on the speed deviation. An excitation frequency computing unit 6 computes an excitation frequency $\omega r$ from the torque current command and the speed feedback signal.

The processing by which the torque current command and excitation frequency $\omega r$ are obtained is also performed by conventional PWM spindle motor drive controllers. In a conventional spindle motor drive controller, a subtractor 3 obtains a current deviation by subtracting a current feedback signal, received from a current detector (not shown in the drawing) that detects the motor driving current, from the torque current command. A current controller 4 then determines a voltage command from the current deviation and a current deadband correction; the current deadband correction is determined from the excitation frequency $\omega r$ and the (fixed) PWM frequency; the voltage command is used to obtain a PWM command.

In the present invention, considering that the effect of the current deadband varies with the PWM frequency, the PWM frequency (PWM cycle) to be input to the current controller 4 is made variable and the current deadband correction is determined from the PWM frequency.

To make the PWM frequency (PWM cycle) variable, the present invention adds a threshold level computing unit 7, a PWM frequency setting unit 8, and a filter 9 to the conventional spindle motor drive controller. From the excitation frequency $\omega r$ and set parameters, the threshold level computing unit 7 computes a threshold level $Lt$ with which the current flowing through the spindle motor is compared in order to change the PWM frequency.

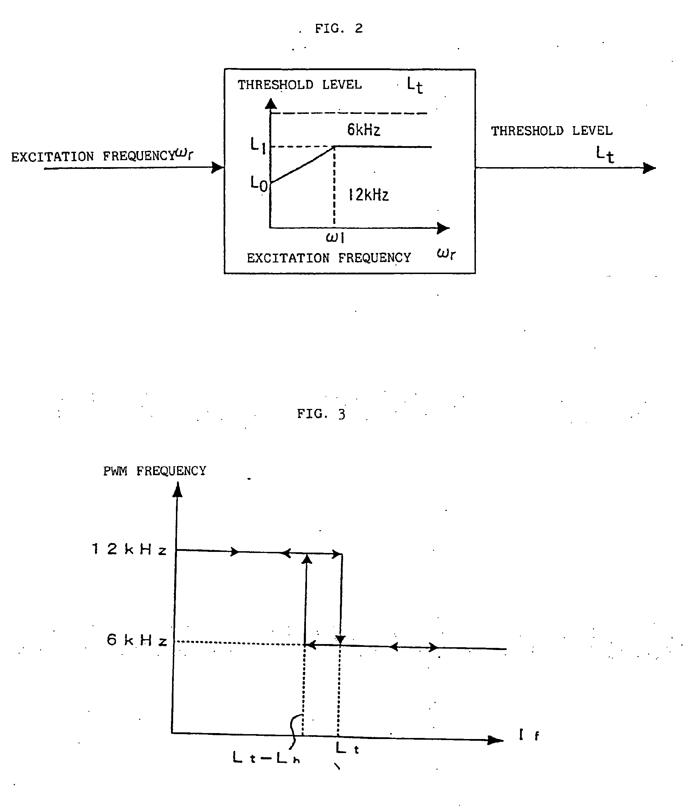

How the threshold level $Lt$ computing unit 7 computes the threshold level $Lt$ will be described below with reference to FIG. 2. In this embodiment, when the excitation frequency $\omega r$ is "0," i.e., when the motor speed is at "0," the threshold level $Lt$ is set to $L0$. When the excitation frequency $\omega r$ exceeds a predetermined excitation frequency $\omega 1$, the threshold level $Lt$ is set to a fixed value $L1$. While the excitation frequency $\omega r$ is in the range from "0" to the predetermined excitation frequency $\omega 1$, the threshold level $Lt$ varies linearly from $L0$ to $L1$. Accordingly, the following relationship exists between the input excitation frequency $\omega r$ and the output threshold level $Lt$:

When $\omega r$ is below $\omega 1$, $Lt = L0 + (L1 - L0) \times (\omega r/\omega 1)$.

When ωr is equal to or above ω1, Lt = L1.

The preset excitation frequency parameter ω1 is determined by the thermal time constant of the power switching element in the inverter unit 5. If the excitation frequency ωr drops and the excitation cycle time exceeds the thermal time constant of the power switching element, the power switching element is loaded with the equivalent of a direct current having the same amplitude as a sinusoidal current corresponding to the voltage command. To protect the power switching element, when the excitation frequency ωr is equal to or less than the preset excitation frequency ω1 determined by the thermal time constant, the current limit value is lowered by lowering the threshold level Lt as the excitation frequency ωr drops.

The PWM frequency setting unit 8 determines the PWM frequency from the threshold level Lt, a hysteresis value Lh (described later) set as a parameter, and the current feedback signal If. In this embodiment, the PWM frequency is switched between 6 kHz and 12 kHz. As shown in FIG. 1, in this embodiment, the current feedback signal If is passed through the filter 9 having a large time constant before being input to the PWM frequency setting unit 8. This prevents generation of chattering during PWM frequency switching.

How the PWM frequency (PWM cycle) is switched between 6 kHz and 12 kHz according to the current feedback signal If input through the filter 9 will be described with reference to FIG. 3. This switching process depends on two parameters: the threshold level Lt and hysteresis Lh.

In the example shown in FIG. 3, the PWM frequency is kept at 12 kHz while the current feedback signal If remains low, and is switched to 6 kHz when the current feedback signal If exceeds the threshold level Lt. While the current feedback signal If remains above the threshold level Lt, the PWM frequency is kept at 6 kHz.

When the current feedback signal If drops from a value above the threshold level Lt to a value equal to or less than the threshold level Lt minus the hysteresis parameter Lh (or equal to or less than Lt - Lh), the PWM frequency is switched from 6 kHz to 12 kHz. The PWM frequency is kept at 12 kHz while the current feedback signal If remains below this value (Lt - Lh).

The PWM frequency setting unit 8 switches the PWM frequency as described above and outputs a 6 kHz or 12 kHz PWM frequency to the current controller 4 and the inverter unit 5.

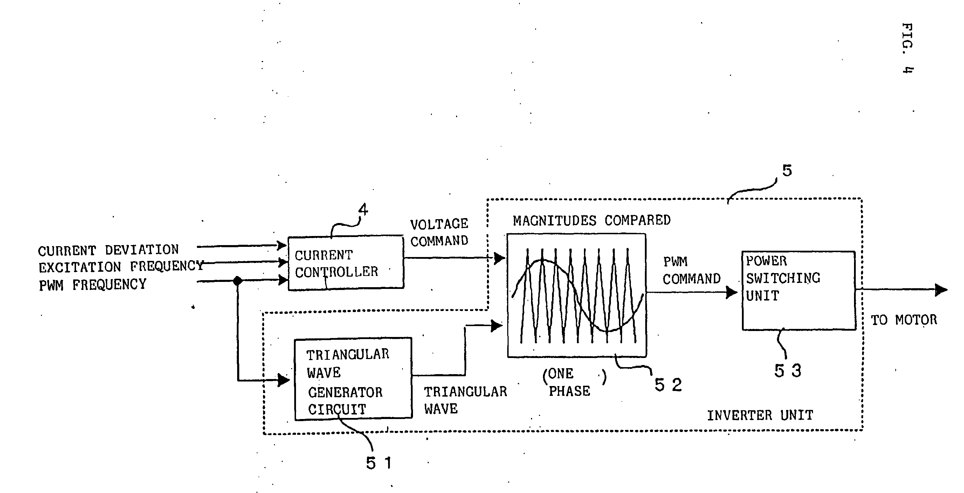

The PWM frequency (PWM cycle) switching operation will be described with reference to FIG. 4. The section enclosed by broken lines in FIG. 4 is the inverter unit 5, which comprises a triangular wave generator circuit 51, a comparator 52, and a power switching unit 53.

The PWM frequency determined by the PWM frequency setting unit 8 is input to the inverter unit 5, in addition to the current controller 4 as described above, and set in a frequency setting register in the triangular wave generator circuit 51. The triangular wave generator circuit 51 outputs a triangular wave at the frequency thus set. The comparator 52 in the inverter unit 5 compares the voltage command from the current controller 4 with the triangular wave from the triangular wave generator circuit 51 and outputs a PWM command to the power switching unit 53. According to this PWM command, the power switching unit 53 controls the on-off operation of the power switching element through which driving current flows into the windings of the spindle motor 10 to drive the spindle motor 10.

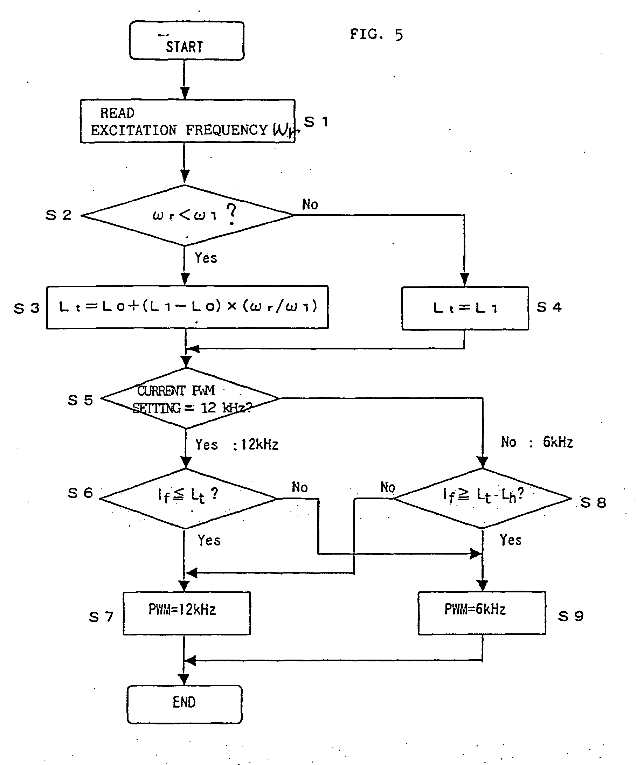

FIG. 5 is a flowchart illustrating the PWM frequency switching control processing, which is performed at predetermined intervals by the processors that control current as described above.

First, the excitation frequency ωr is read (Step S1). Then, the excitation frequency ωr is compared with the parameter setting ω1 (Step S2). If the ωr value is below the parameter setting ω1, the threshold level Lt is obtained by the following equation (1) (Step S3).

$$Lt = L0 + (L1 - L0) \times (\omega r/\omega 1) \qquad \dots (1)$$

If the excitation frequency ωr is equal to or greater than the parameter setting ω1, the threshold level Lt is set to the parameter L1 (Step S4).

Then, the PWM frequency is checked to see if it is currently set at 12 kHz (Step S5). Incidentally, the PWM frequency is initialized to 12 kHz when the spindle motor drive controller is powered on. If the PWM frequency is currently set at 12 kHz, the current feedback value If is checked to see if it is equal to or less than the threshold level Lt obtained above (Step S6). If the current feedback value If is equal to or less than the threshold level Lt, the PWM frequency is set to 12 kHz (Step S7). If the current feedback value If is above the threshold level Lt, the PWM frequency is set to 6 kHz (Step S9). In short, as the excitation frequency ωr drops, the threshold level Lt is lowered according to the equation (1) above and consequently the current limit value for keeping the PWM frequency at 12 kHz is lowered.

Since the current feedback value If at which the PWM frequency is switched from 12 kHz to 6 kHz is lowered in Step S6, the PWM frequency is switched to 6 kHz at increasingly lower current values as the excitation frequency ωr drops. Thus, the power switching element is protected.

If the current PWM frequency setting is 6 kHz and not 12 kHz in Step S5, the current feedback value If is checked to see if it is equal to or greater than the threshold level Lt minus the hysteresis setting Lh (or equal to or greater than (Lt - Lh)) (Step S8); if so, the PWM frequency is set to 6 kHz (Step S9). If the current feedback value If drops below the value (Lt - Lh), the PWM frequency is set to 12 kHz (Step S7).

The PWM frequency is thus switched. When the motor is driven with a high current during acceleration or deceleration, for example, the PWM frequency is switched to the lower frequency of 6 kHz, so the PWM cycle becomes longer, the power switching element operates less frequently, and heat generation in the drive unit is suppressed. On the other hand, when the motor is driven with a low current in the range where heat generation in the drive unit is acceptable, the PWM frequency is switched to 12 kHz, to shorten the PWM cycle, and heat generation in the motor is suppressed.

## Claims

1. A spindle motor drive controller using a pulse width modulation (PWM) technique for driving a spindle motor (10) in a machine tool, wherein
   the spindle motor drive controller changes a pulse width modulation cycle according to the magnitude of current value to reduce heat generation in a motor (10) and a drive unit, wherein
   when the current value is above a threshold (Lt), heat generation in the drive unit is reduced by lengthening the pulse width modulation cycle and, when the current value is equal to or below the threshold (Lt), heat generation in the motor (10) is reduced by shortening the pulse width modulation cycle.

2. The spindle motor drive controller according to claim 1, wherein, when an excitation frequency (wr) is above a frequency (ω1) determined by a thermal time constant of a power switching element, a current threshold level (Lt) for changing a PWM frequency is set to a fixed value and, when the excitation frequency (ωr) is below the frequency determined by the thermal time constant of the power switching element, the current threshold level (Lt) is lowered in accordance with the excitation frequency (ωr).

3. The spindle motor drive controller according to claim 1, wherein said magnitude of current value is determined by a magnitude of a current feedback signal (If) obtained through a filter (9).

4. The spindle motor drive controller according to claim 1, wherein the pulse width modulation cycle is switched according to the magnitude of current value and a hysteresis value (Lh).

5. The spindle motor drive controller according to claim 1, comprising:

   a current controller (4) generating a voltage command based on a current command, a current feedback value, an excitation frequency (ωr), and a PWM frequency;
   an inverter unit (5) receiving the voltage command from the current controller (4) and generating a PWM command;
   a PWM frequency setting unit (8) receiving said current feedback value and the threshold level (Lt) and setting the PWM frequency to be output to said current controller (4); and
   a threshold level computing unit (7) receiving said excitation frequency (ωr) and computing the threshold level output to said PWM frequency setting unit (8).

6. The spindle motor drive controller according to claim 5, wherein the current feedback value is passed through a filter (9) before being input to said PWM frequency setting unit (8), thereby preventing chattering in PWM frequency switching.

7. The spindle motor drive controller according to claim 5, wherein said PWM frequency setting unit (8) is supplied with a hysteresis value (Lh), in addition to the current feedback value and the threshold level (Lt), and sets the PWM frequency to be output to said current controller (4) based on the current feedback value, the threshold level (Lt), and the hysteresis value (Lh).

## Patentansprüche

1. Spindelmotorantriebsregler, der eine Pulsweitenmodulations- (PWM-) Technik zum Antreiben eines Spindelmotors (10) in einer Werkzeugmaschine verwendet, wobei

der Spindelmotorantriebsregler einen Pulsweitenmodulationszyklus je nach der Größe des Stromwerts verändert, so dass die Wärmeentwicklung in einem Motor (10) und in einer Antriebseinheit kleiner wird, wobei die Wärmeentwicklung in der Antriebseinheit verringert wird durch Verlängern des Pulsweitenmodulationszyklus', wenn der Stromwert eine Schwelle (Lt) überschreitet, und die Wärmeentwicklung in dem Motor (10) verringert wird durch Verkürzen des Pulsweitenmodulationszyklus, wenn der Stromwert gleich der Schwelle (Lt) order darunter ist.

2. Spindelmotorantriebsregler nach Anspruch 1, wobei ein Stromschwellenwert (Lt) zum Verändern einer PWM-Frequenz auf einen festen Wert eingestellt wird, wenn eine Anregungsfrequenz ($\omega$r) größer als eine Frequenz ($\omega$r) ist, die durch eine Wärmezeitkonstante von einem Netzschalterelement vorgegeben wird, und der Stromschwellenwert (Lt) je nach der Anregungsfrequenz ($\omega$r) gesenkt wird, wenn die Anregungsfrequenz ($\omega$r) kleiner ist als die Frequenz, die durch die Wärmezeitkonstante des Netzschalterelements vorgegeben wird.

3. Spindelmotorantriebsregler nach Anspruch 1, wobei die Größe des Stromwerts gegeben wird durch die Größe eines Stromfeedbacksignals (If), das durch einen Filter (9) erhalten wird.

4. Spindelmotorantriebsregler nach Anspruch 1, wobei der Pulsweitenmodulationszyklus je nach der Größe von einem Stromwert und einem Hysteresewert (Lh) umgeschaltet wird.

5. Spindelmotorantriebsregler nach Anspruch 1, umfassend:

einen Stromregler (4), der einen Spannungsbefehl erzeugt auf Basis von einem Strombefehl, einem Stromfeedbackwert, einer Anregungsfrequenz ($\omega$r) und einer PWM-Frequenz;
eine Umrichtereinheit (5), die den Spannungsbefehl vom Stromregler (4) erhält und einen PWM-Befehl erzeugt;
eine PWM-Frequenz-Einstelleinheit (8), die den Stromfeedbackwert und den Schwellenwert (Lt) empfängt und die PWM-Frequenz einstellt, die an den Stromregler (4) ausgegeben werden soll; und
eine Schwellenwert-Berechnungseinheit (7), die die Anregungsfrequenz ($\omega$r) empfängt und den an die PWM-Frequenz-Einstelleinheit (8) ausgegebenen Schwellenwert berechnet.

6. Spindelmotorantriebsregler nach Anspruch 5, wobei der Stromfeedbackwert durch einen Filter (9) geleitet wird, bevor er in die PWM-Frequenz-Einstelleinheit (8) eingegeben wird, so dass Rattern beim Umschalten der PWM-Frequenz verhindert wird.

7. Spindelmotorantriebsregler nach Anspruch 5, wobei die PWM-Frequenz-Einstelleinheit (8) einen Hysteresewert (Lh) zusätzlich zu dem Stromfeedbackwert und dem Schwellenwert (Lt) erhält und die PWM-Frequenz, die an den Stromregler (4) ausgegeben werden soll, auf Basis von dem Stromfeedbackwert, dem Schwellenwert (Lt) und dem Hysteresewert (Lh) einstellt.

**Revendications**

1. Dispositif de commande d'entraînement d'un moteur à broche, utilisant une technique de modulation de largeur d'impulsion (PWM) pour l'entraînement d'un moteur à broche (10) dans une machine-outil, où le dispositif de commande d'entraînement du moteur à broche change un cycle de modulation de largeur d'impulsion selon la grandeur de la valeur courante pour réduire une génération de chaleur dans un moteur (10) et une unité d'entraînement, où lorsque la valeur du courant est au-dessus d'un seuil (Lt), la génération de la chaleur dans l'unité d'entraînement est réduite en allongeant le cycle de modulation de largeur d'impulsion et, lorsque la valeur du courant est égale ou inférieure au seuil (Lt), la génération de la chaleur dans le moteur (10) est réduite en raccourcissant le cycle de modulation de largeur d'impulsion.

2. Dispositif de commande d'entraînement d'un moteur à broche selon la revendication 1, dans lequel, lorsqu'une fréquence d'excitation ($\omega$r) est au-dessus d'une fréquence ($\omega$1) déterminée par une constante de temps thermique d'un élément de commutation de puissance, un niveau de seuil de courant (Lt) pour changer une fréquence PWM est établi à une valeur fixe et, lorsque la fréquence d'excitation ($\omega$r) est en dessous de la fréquence déterminée par la constante de temps thermique de l'élément de commutation de puissance, le niveau de seuil de courant (Lt) est diminué en accord avec la fréquence d'excitation ($\omega$r).

3. Dispositif de commande d'entraînement d'un moteur à broche selon la revendication 1, dans lequel ladite grandeur de la valeur courante est déterminée par une grandeur d'un signal de contre-réaction de courant (If) obtenu à travers un filtre (9) .

**4.** Dispositif de commande d'entraînement d'un moteur à broche selon la revendication 1, dans lequel le cycle de modulation de largeur d'impulsion est commuté selon la grandeur de la valeur courante et une valeur d'hystérésis (Lh).

**5.** Dispositif de commande d'entraînement d'un moteur à broche selon la revendication 1, comprenant:

un dispositif de commande de courant (4) produisant une commande de tension sur la base d'une commande de courant, une valeur de contre-réaction de courant, une fréquence d'excitation ($\omega$r) et une fréquence PWM; une unité d'inverseur (5) recevant la commande de tension du dispositif de commande de courant (4) et produisant une commande de PWM; une unité de réglage de fréquence PWM (8) recevant ladite valeur de contre-réaction de courant et le niveau de seuil (Lt) et établissant la fréquence PWM à émettre audit dispositif de commande de courant (4); et une unité de calcul de niveau de seuil (7) recevant ladite fréquence d'excitation ($\omega$r) et calculant le niveau de seuil émis à ladite unité d'établissement de fréquence PWM (8).

**6.** Dispositif de commande d'entraînement d'un moteur à broche selon la revendication 5, dans lequel la valeur de contre-réaction de courant est passée à travers un filtre (9) avant d'être entrée dans ladite unité d'établissement de fréquence PWM (8), en empêchant ainsi un cliquetis dans la commutation de la fréquence PWM.

**7.** Dispositif de commande d'entraînement d'un moteur à broche selon la revendication 5, dans lequel ladite unité d'établissement de fréquence PWM (8) reçoit une valeur d'hystérésis (Lh), en plus de la valeur de contre-réaction de courant et du niveau de seuil (Lt), et établit la fréquence PWM à émettre audit dispositif de commande de courant (4) sur la base de la valeur de contre-réaction de courant, le niveau de seuil (Lt) et la valeur d'hystérésis (Lh).

FIG. 1

. FIG. 2

THRESHOLD LEVEL · $L_t$

EXCITATION FREQUENCY $\omega r$ →

6kHz

$L_1$

$L_0$

12kHz

$\omega_1$

EXCITATION FREQUENCY $\omega r$

THRESHOLD LEVEL

$L_t$ →

FIG. 3

PWM FREQUENCY

12kHz

6kHz

$L_t - L_h$     $L_t$

$I_f$

FIG. 4

EP 1 496 608 B1

CURRENT DEVIATION
EXCITATION FREQUENCY
PWM FREQUENCY

CURRENT
CONTROLLER
4

VOLTAGE
COMMAND

MAGNITUDES COMPARED

5

PWM
COMMAND

POWER
SWITCHING
UNIT

TO MOTOR

53

(ONE
PHASE)

52

TRIANGULAR
WAVE
GENERATOR
CIRCUIT

TRIANGULAR
WAVE

INVERTER UNIT

51

10

FIG. 5

START

READ
EXCITATION FREQUENCY $\omega_r$   S 1

S 2   $\omega_r < \omega_1$ ?   No

Yes

S 3   $L_t = L_0 + (L_1 - L_0) \times (\omega_r / \omega_1)$

S 4   $L_t = L_1$

S 5   CURRENT PWM
SETTING = 12 kHz?   No : 6kHz

Yes : 12kHz

S 6   $I_f \leq L_t$ ?   No   No   $I_f \geq L_t - L_h$ ?   S 8

Yes   Yes

S 7   PWM=12kHz

S 9   PWM=6kHz

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001275394 A
- JP 7222478 A
- US 5744927 A
- WO 9739523 A1